# FASCICULE DE BREVET EUROPEEN

(11) **EP 3 931 083 B1**
(45) Date de publication et mention de la délivrance du brevet: **18.02.2026**
(21) Numéro de dépôt: 20705743.1
(22) Date de dépôt: 25.02.2020
(51) Int. Cl.: B64C 7/02, B64C 23/06, B64D 15/04, F02C 7/047

(54) **DISPOSITIF DE DEGIVRAGE POUR UNE ENTREE D'AIR D'UNE NACELLE DE TURBOREACTEUR D'AERONEF**
ENTEISUNGSVORRICHTUNG FÜR EINEN LUFTEINLASS EINER FLUGZEUGTURBOSTRAHLTRIEBWERKSGONDEL
DE-ICING DEVICE FOR AN AIR INTAKE OF AN AIRCRAFT TURBOJET ENGINE NACELLE

(30) Priorité: 27.02.2019 FR 1902012
(43) Date de publication de la demande: 05.01.2022
(73) Titulaire: Safran Nacelles, 76700 Gonfreville-l'Orcher (FR)
(72) Inventeur: LE DOCTE, Thierry Jacques Albert, 77550 Moissy-Cramayel (FR)
(74) Mandataire: Argyma
(86) Numéro de dépôt international: PCT/EP2020/054866
(87) Numéro de publication internationale: WO 2020/173921

(56) Documents cités:
- EP-A1- 3 199 458
- CA-A1- 2 689 195
- FR-A1- 2 813 581
- FR-B1- 2 813 581
- US-A1- 2018 194 485

## Description

### DOMAINE TECHNIQUE DE L'INVENTION

La présente invention concerne le domaine des turboréacteurs d'aéronef et vise plus particulièrement un dispositif de dégivrage d'une entrée d'air d'une nacelle d'un turboréacteur d'aéronef.

### ETAT DE LA TECHNIQUE

De manière connue, un aéronef comporte un ou plusieurs turboréacteurs pour permettre sa propulsion par accélération d'un flux d'air qui circule d'amont en aval dans le turboréacteur.

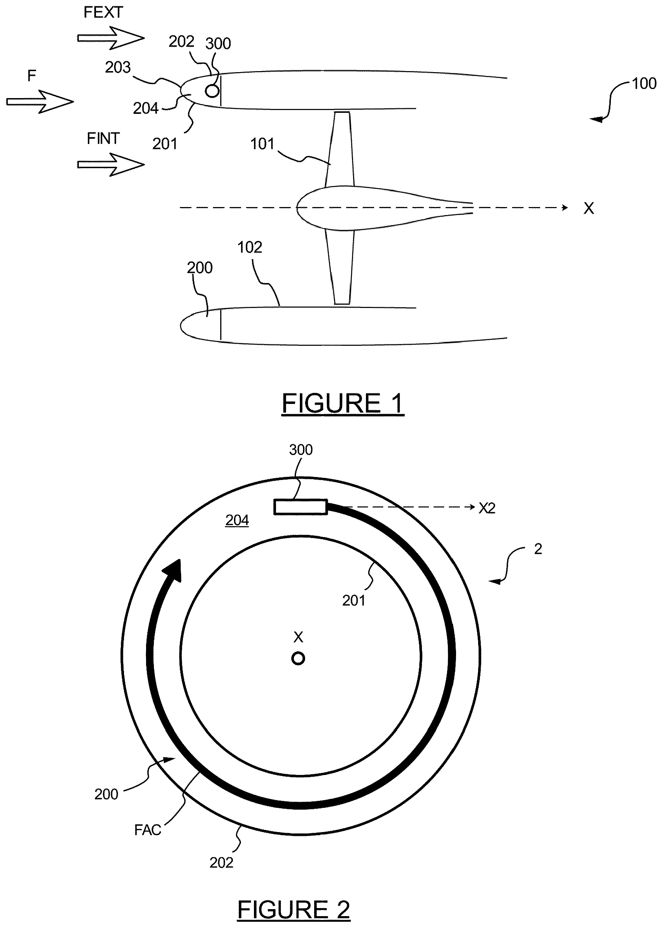

En référence à la figure 1, il est représenté un turboréacteur 100 s'étendant selon un axe X et comportant une soufflante 101 montée rotative autour de l'axe X dans une nacelle comportant une virole extérieure 102 afin d'accélérer un flux d'air F d'amont vers l'aval. Par la suite, les termes amont et aval sont définis par rapport à la circulation du flux d'air F. Le turboréacteur 100 comporte à son extrémité amont une entrée d'air 200 comportant une cavité 204, s'étendant de manière annulaire autour de l'axe X, qui comporte une paroi intérieure 201 tournée vers l'axe X et une paroi extérieure 202 qui est opposée à la paroi intérieure 201, les parois 201, 202 sont reliées par un bord d'attaque 203 également appelé « lèvre de l'entrée d'air ». Ainsi, l'entrée d'air 200 permet de séparer le flux d'air entrant F en un flux d'air intérieur FINT guidé par la paroi intérieure 201 et un flux d'air extérieur FEXT guidé par la paroi extérieure 202. Par la suite, les termes intérieur et extérieur sont définis radialement par rapport à l'axe X du turboréacteur 100.

De manière connue, lors du vol d'un aéronef, du fait des conditions de température et de pression, du givre est susceptible de s'accumuler au niveau du bord d'attaque 203 et de la paroi intérieure 201 de l'entrée d'air 200 et de former des blocs de givre qui sont susceptibles d'être ingérés par le turboréacteur 100. De telles ingestions doivent être évitées afin d'améliorer la durée de vie du turboréacteur 100 et réduire les dysfonctionnements.

Pour éliminer l'accumulation de givre, toujours en référence à la figure 1, il est connu de faire circuler un flux d'air chaud FAC dans la cavité intérieure 204 afin de chauffer la paroi intérieure 201 par convection thermique et ainsi éviter l'accumulation de givre qui fond au fur et à mesure de son accumulation.

L'introduction du flux d'air chaud FAC dans la cavité intérieure 204 est réalisée par un injecteur 300 se présentant de manière traditionnelle sous la forme d'un tube de section cylindrique qui est orienté selon une direction tangentielle à l'axe du turboréacteur comme illustré à la figure 2. Le flux d'air chaud FAC se déplace de manière circonférentielle dans la cavité intérieure 204 afin de chauffer la paroi intérieure 201.

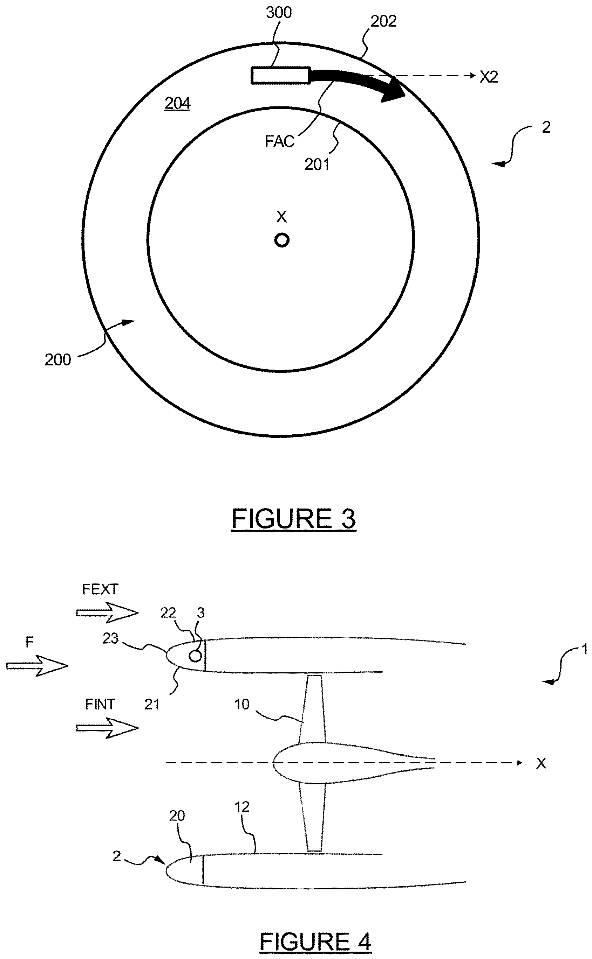

En pratique, le rendement énergétique d'un tel chauffage est faible étant donné que le flux d'air chaud FAC chauffe également la paroi extérieure 202, ce qui constitue une perte de calories. Dans les faits, en référence à la figure 3, lors de l'injection du flux d'air chaud FAC, celui-ci entre directement en contact avec la paroi extérieure 202 qui capte une grande partie des calories du flux d'air chaud FAC lors de son guidage dans la cavité intérieure 204. Aussi, pour permettre un chauffage optimal de la paroi intérieure 201, il est nécessaire d'injecter un flux d'air FAC surchauffé dans la cavité intérieure 204. Une solution immédiate pour éliminer cet inconvénient serait de modifier l'orientation de l'injecteur 300 dans la cavité intérieure 204 afin de viser la paroi intérieure 201. Néanmoins, une telle solution immédiate ne permet pas de chauffer de manière uniforme une paroi extérieure 202 circonférentielle. Dans le meilleur des cas, cette solution entraine un déplacement de la zone de contact du flux d'air chaud FAC avec la paroi extérieure 202 qui demeure ainsi présente.

Un des objectifs de la présente invention est de permettre un chauffage de la paroi intérieure 201 de l'entrée d'air 200 d'une nacelle d'un turboréacteur avec un rendement énergétique amélioré.

De manière incidente, on connaît par la demande de brevet CA2689195 un injecteur d'un flux d'air chaud vrillé. On connaît par la demande de brevet FR2813581 un injecteur d'un flux d'air chaud vrillé et d'un flux d'air chaud axial de manière concentrique afin de former un flux d'air chaud ayant une symétrie selon l'axe d'embouchure de l'injecteur afin de chauffer indifféremment les parois de la cavité intérieure.

### PRESENTATION DE L'INVENTION

L'invention concerne un dispositif de dégivrage pour une entrée d'air d'une nacelle de turboréacteur d'aéronef s'étendant selon un axe X dans lequel circule un flux d'air d'amont vers l'aval, l'entrée d'air comportant une cavité intérieure, s'étendant de manière annulaire autour de l'axe X, qui comporte une paroi intérieure tournée vers l'axe X et une paroi extérieure qui est opposée à la paroi intérieure, les parois étant reliées par un bord d'attaque, le dispositif de dégivrage comportant au moins un injecteur d'un flux d'air chaud dans la cavité intérieure, l'injecteur comportant une embouchure s'étendant selon un axe d'embouchure.

L'invention est remarquable en ce que l'embouchure est configurée pour injecter un flux d'air chaud ayant une dissymétrie selon l'axe d'embouchure de manière à générer des turbulences au voisinage de la paroi extérieure tout en chauffant la paroi intérieure. Autrement dit, le flux d'air chaud ne présente pas une symétrie de révolution autour de l'axe d'embouchure. Cela permet avantageusement de chauffer de manière différente la paroi intérieure et la paroi extérieure de la cavité intérieure afin de maximiser les échanges thermiques avec la paroi intérieure et les minimiser avec la paroi extérieure. Ainsi, le chauffage de la paroi intérieure est optimal.

De préférence, l'embouchure comporte au moins un premier canal configuré pour conduire un premier flux élémentaire et au moins un deuxième canal configuré pour conduire un deuxième flux élémentaire de manière à former le flux d'air chaud. Les canaux sont superposés, c'est-à-dire, non concentriques. Grâce à l'invention, l'embouchure permet de former un premier flux élémentaire dédié à la paroi extérieure et un deuxième flux élémentaire dédié à la paroi intérieure de manière à permettre un chauffage différencié. De manière avantageuse, le différentiel de pression crée, dans la zone de mélange des flux élémentaires FE1, FE2, une déviation du flux d'air chaud FAC par effet Coanda.

De manière préférée, le premier canal comporte au moins un organe de déviation d'air. De préférence, l'organe de déviation d'air est configuré pour vriller le premier flux élémentaire. Selon un aspect préféré, l'organe de déviation d'air possède une forme hélicoïdale. Ainsi, le premier flux élémentaire vrillé permet de générer des turbulences qui permettent, d'une part, de limiter les échanges thermiques avec la paroi extérieure de la cavité et, d'autre part, de réaliser une torsion du premier flux élémentaire afin de favoriser une circulation circonférentielle dans la cavité intérieure annulaire.

De préférence, le deuxième canal est dénué d'organe de déviation d'air de manière à fournir un deuxième flux élémentaire sensiblement axial.

Selon un aspect préféré, l'embouchure comporte un organe de séparation afin de séparer l'embouchure entre le premier canal et le deuxième canal. Autrement dit, l'embouchure est constituée de deux canaux. De manière préférée, l'organe de séparation se présente sous la forme d'une paroi sensiblement plane, de préférence, parallèle à l'axe d'embouchure. Ainsi, les flux élémentaires sont guidés de manière indépendante dans l'embouchure de manière à permettre deux guidages différents. Selon un aspect préféré, l'embouchure comporte uniquement deux canaux.

De préférence, le premier canal est convergent de l'amont vers l'aval afin d'accélérer le premier flux élémentaire. De préférence, le deuxième canal est convergent de l'amont vers l'aval afin d'accélérer le deuxième flux élémentaire.

L'invention concerne également une entrée d'air d'une nacelle de turboréacteur d'aéronef s'étendant selon un axe X dans lequel circule un flux d'air d'amont vers l'aval, l'entrée d'air comportant une cavité intérieure, s'étendant de manière annulaire autour de l'axe X, qui comporte une paroi intérieure tournée vers l'axe X et une paroi extérieure qui est opposée à la paroi intérieure, les parois étant reliées par un bord d'attaque, l'entrée d'air comportant un dispositif de dégivrage, tel que présenté précédemment, dans lequel le premier flux élémentaire est configuré pour être injecté du côté de la paroi extérieure de la cavité intérieure. De préférence, le deuxième flux élémentaire est configuré pour être injecté du côté de la paroi intérieure de la cavité intérieure.

De manière préférée, le premier flux élémentaire est radialement extérieur au deuxième flux élémentaire.

L'invention concerne également un procédé d'utilisation d'un dispositif de dégivrage tel que présenté précédemment pour le dégivrage d'une entrée d'air d'une nacelle de turboréacteur d'aéronef s'étendant selon un axe X dans lequel circule un flux d'air d'amont vers l'aval, l'entrée d'air comportant une cavité intérieure, s'étendant de manière annulaire autour de l'axe X, qui comporte une paroi intérieure tournée vers l'axe X et une paroi extérieure qui est opposée à la paroi intérieure, les parois étant reliées par un bord d'attaque, le procédé comportant une étape d'injection d'un flux d'air chaud ayant une dissymétrie selon l'axe d'embouchure de manière à générer des turbulences au voisinage de la paroi extérieure tout en chauffant la paroi intérieure.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique d'une entrée d'air d'une nacelle selon l'art antérieur,
La figure 2 est une représentation schématique en coupe transversale de la circulation théorique d'un flux d'air chaud dans l'entrée d'air,
La figure 3 est une représentation schématique en coupe transversale de la circulation réelle d'un flux d'air chaud dans l'entrée d'air,
La figure 4 est une représentation schématique d'une entrée d'air d'une nacelle selon l'invention,
La figure 5 est une représentation schématique de la circulation d'un flux d'air chaud dans l'entrée d'air selon une forme de réalisation de l'invention,
La figure 6 est une représentation schématique d'une embouchure d'un injecteur d'un dispositif de dégivrage selon l'invention ;
La figure 7 est une représentation schématique en transparence d'une embouchure d'un injecteur d'un dispositif de dégivrage selon l'invention ;
La figure 8 est une représentation schématique en perspective d'une paroi de séparation et d'un organe de déviation d'air ; et
La figure 9 est une représentation schématique de côté de la paroi de séparation et de l'organe de déviation d'air.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

En référence à la figure 4, il est représenté un turboréacteur 1 s'étendant selon un axe X et comportant une soufflante 10 montée rotative autour de l'axe X dans une nacelle comportant une virole extérieure 12 afin d'accélérer un flux d'air F d'amont vers l'aval. Par la suite, les termes amont et aval sont définis par rapport à la circulation du flux d'air F. Le turboréacteur 1 comporte à son extrémité amont une entrée d'air 2 qui comporte une cavité intérieure 20, s'étendant de manière annulaire autour de l'axe X, qui comporte une paroi intérieure 21 tournée vers l'axe X et une paroi extérieure 22 qui est opposée à la paroi intérieure 21. Les parois 21, 22 sont reliées par un bord d'attaque 23 également appelé « lèvre de l'entrée d'air ». Ainsi, l'entrée d'air 2 permet de séparer le flux d'air entrant F en un flux d'air intérieur FINT guidé par la paroi intérieure 21 et un flux d'air extérieur FEXT guidé par la paroi extérieure 22. Par la suite, les termes intérieur et extérieur sont définis radialement par rapport à l'axe X du turboréacteur 1.

Le turboréacteur 1 comporte un dispositif de dégivrage pour éliminer l'accumulation de givre. De manière connue, le dispositif de dégivrage comporte un injecteur 3 d'un flux d'air chaud FAC dans la cavité intérieure 20. Une telle circulation d'un flux d'air chaud FAC permet, par convection thermique, de chauffer la paroi intérieure 21 et ainsi éviter l'accumulation de givre qui fond au fur et à mesure de son accumulation.

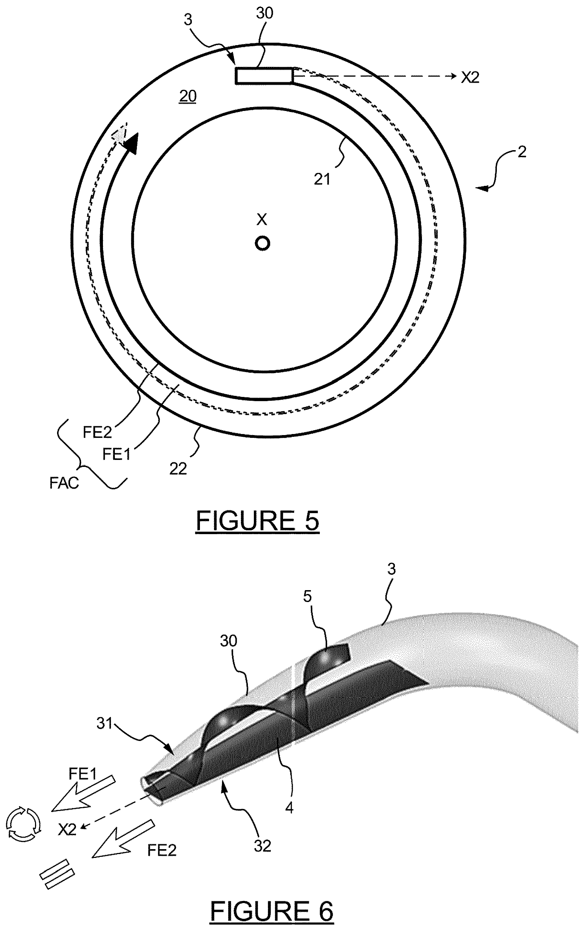

En référence à la figure 5, l'injecteur 3 comporte une embouchure 30 s'étendant selon un axe d'embouchure X2 de manière à permettre une injection de manière circonférentielle dans la cavité intérieure 20 de l'entrée d'air 2. De manière préférée, l'axe d'embouchure X2 est tangentiel à l'axe du turboréacteur X. Selon l'invention, l'embouchure 30 est configurée pour injecter un flux d'air chaud FAC ayant une dissymétrie selon l'axe d'embouchure X2. Autrement dit, le flux d'air chaud FAC ne présente pas une symétrie de révolution autour de l'axe d'embouchure X2.

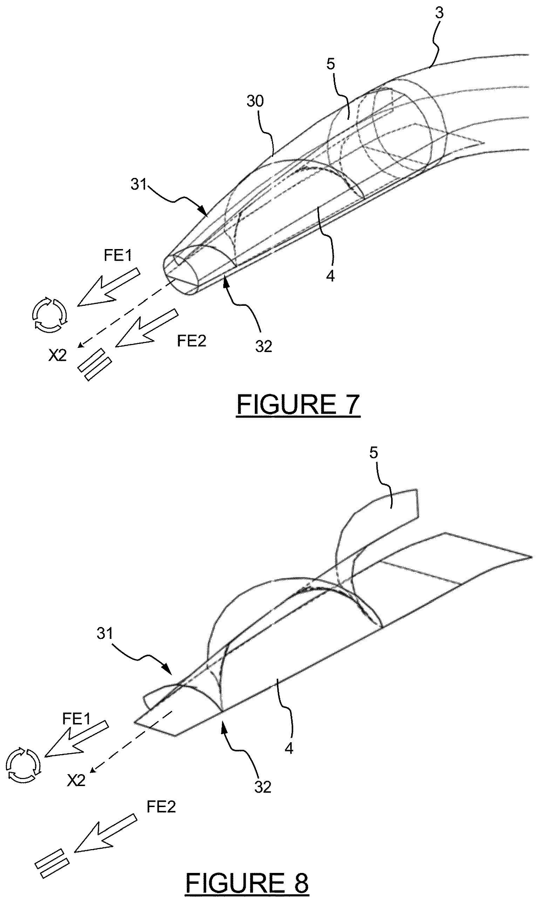

Dans cet exemple, en référence aux figures 6 et 7, l'embouchure 30 comporte un premier canal 31 configuré pour conduire un premier flux élémentaire FE1 et un deuxième canal 32 configuré pour conduire un deuxième flux élémentaire FE2 de manière à former le flux d'air chaud FAC. Autrement dit, le flux d'air chaud FAC comporte le premier flux élémentaire FE1 et le deuxième flux élémentaire FE2. De manière préférée, l'embouchure 30 ne comporte que deux canaux 31, 32 afin de permettre un dégivrage optimal mais il va de soi que le nombre de canaux pourrait être plus élevé. Le premier flux élémentaire FE1 et le deuxième flux élémentaires FE2 sont différents. Dans cet exemple, le premier flux élémentaire FE1 est vrillé autour de l'axe d'embouchure X2 tandis que le deuxième flux élémentaire FE2 circule parallèlement à l'axe d'embouchure X2 de manière à former ensemble un flux global ayant une dissymétrie selon l'axe d'embouchure X2.

Dans cet exemple, la section du premier canal 31, selon l'axe d'embouchure X2, est plus grande que la section du deuxième canal 32. Cela permet avantageusement de vriller de manière optimale le premier flux élémentaire FE1 comme cela sera présenté par la suite.

Le premier canal 31 est convergent d'amont vers l'aval de manière à accélérer le premier flux élémentaire FE1. Autrement dit, la section transversale de passage du premier canal 31 rétrécit d'amont en aval, sa section d'entrée étant supérieure à sa section de sortie.

Selon un aspect de l'invention, le deuxième canal 32 est convergent d'amont vers l'aval de manière à accélérer le deuxième flux élémentaire FE2. Autrement dit, la section transversale de passage du deuxième canal 32 rétrécit d'amont en aval, sa section d'entrée étant supérieure à sa section de sortie.

Le taux de convergence d'un canal 31, 32, c'est-à-dire le rapport de leur section d'entrée et leur section de sortie, est égal ou différent entre les deux canaux 31 , 32.

Comme illustré aux figures 6 et 7, l'embouchure 30 comporte un organe de séparation 4 et un organe de déviation d'air 5. De manière préférée, l'organe de séparation 4 se présente sous la forme d'une paroi sensiblement plane afin de séparer l'embouchure 30 en deux canaux 31, 32. Il va de soi que l'organe de séparation 4 pourrait se présenter sous une forme différente, notamment, une forme concave ou convexe.

De préférence, l'organe de séparation 4 s'étend de manière parallèle à l'axe d'embouchure X2 afin de permettre un guidage différencié dans les canaux 31, 32. Dans cet exemple, le premier canal 31 comporte un unique organe de déviation d'air 5. Néanmoins, il va de soi qu'il pourrait en comprendre plusieurs, en série ou en parallèle. De manière préférée, la longueur de la paroi de séparation 4 est adaptée à la longueur de l'organe de déviation d'air 5.

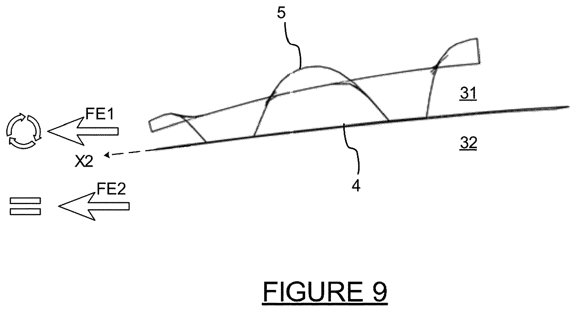

Dans cet exemple, l'organe de déviation d'air 5 est configuré pour vriller le premier flux élémentaire FE1. A cet effet, l'organe de déviation d'air 5 possède une forme hélicoïdale réalisant trois vrilles comme illustré aux figures 8 et 9. De préférence, le nombre de vrilles est compris entre 2 et 5 afin de vriller le premier flux élémentaire FE1 de manière optimale. De préférence, le premier canal 31 possède une section décroissante jusqu'à sa sortie de manière à permettre de vriller et d'accélérer le premier flux élémentaire FE1, ce qui permet d'augmenter les turbulences dans la cavité intérieure 20 et évite d'impacter frontalement la paroi extérieure 22. En outre, un tel organe de déviation d'air 5 permet de favoriser une circulation circonférentielle dans l'entrée d'air 2 de manière naturelle étant donné que le premier flux élémentaire FE1 est éjecté de manière vrillée. Aussi, contrairement à l'art antérieur qui permettait un guidage circonférentiel du flux d'air chaud FAC uniquement par la paroi extérieure 22 de la cavité intérieure 20, ce qui engendrait pour rappel des pertes de calories, la présente invention permet également un guidage circonférentiel du fait de la torsion du flux d'air chaud FAC, ce qui limite les pertes de calories. Le deuxième canal 32 est dénué d'organe de déviation d'air de manière à ce que les flux élémentaires FE1, FE2 soit injectés avec des angles différents (trajection axiale/trajection hélicoïdale) et à des vitesses différentes.

Les deux flux élémentaires FE1, FE2 sont éjectés de manière superposée. Le différentiel de pression crée, dans la zone de mélange des flux élémentaires FE1, FE2, une déviation du flux d'air chaud FAC par effet Coanda. La position, l'angle, le rapport de débit et les vitesses relatives des deux flux élémentaires FE1, FE2 sont déterminées de manière à permettre une déviation optimale, c'est-à-dire, qui suit la forme annulaire de la cavité intérieure 20. De manière préférée, afin de contrôler la déviation, l'injecteur 3 comporte un dispositif, statique ou dynamique, de régulation des pertes de charge.

En référence à la figure 5, le premier flux élémentaire FE1 est configuré pour être injecté du côté de la paroi extérieure 22 de la cavité intérieure 20 tandis que le deuxième flux élémentaire FE2 est configuré pour être injecté du côté de la paroi intérieure 21 de la cavité intérieure 20. Autrement dit, le premier canal 31 est radialement intérieur au deuxième canal 32. Comme cela va être présenté dans l'exemple de mise en oeuvre de l'invention, l'utilisation d'un tel dispositif de dégivrage permet d'optimiser le chauffage de la paroi intérieure 21 de la cavité intérieure 20 tout en limitant les pertes de calories

De manière alternative, le deuxième canal 32 est radialement extérieur et le premier canal 31 est radialement intérieur en fonction des pressions d'alimentation des canaux 31, 32.

Le procédé comporte une étape d'injection dans la cavité intérieure 20 par l'injecteur 3 d'un flux global d'air chaud FAC ayant une dissymétrie selon l'axe d'embouchure X2. Dans cet exemple, le premier canal 31, radialement extérieur, injecte un premier flux élémentaire FE1 qui est vrillé et qui permet de réaliser une torsion au flux global d'air chaud FAC, ce qui limite les contacts avec la paroi extérieure 22. En outre, le premier flux élémentaire FE1 génère des turbulences au voisinage de la paroi extérieure 22 qui limitent la vitesse de circulation au voisinage de la paroi extérieure 22 qui capte ainsi une quantité limitée de calories. Autrement dit, les échanges thermiques entre la paroi extérieure 22 et le premier flux élémentaire FE1 du flux d'air chaud FAC sont réduits de manière importante.

A l'inverse, le deuxième canal 32, radialement intérieur injecte un deuxième flux élémentaire FE2 qui est axial. Cela permet d'apporter une grande quantité de calories à la paroi intérieure 21 pour la chauffer afin qu'elle demeure sèche. De manière avantageuse, le premier flux élémentaire FE1 permet de guider la circulation circonférentielle du deuxième flux élémentaire FE2 sans lui prélever des calories, ce qui est avantageux. La dissymétrie du flux d'air chaud FAC permet avantageusement de chauffer de manière différente la paroi intérieure 21 et la paroi extérieure 22. Grâce à l'invention, on améliore le dégivrage d'une entrée d'air 2 de manière pratique en modifiant l'embouchure 30 de l'injecteur 3. En pratique, un rendement supérieur à 75% est obtenu, ce qui est supérieur aux dispositifs de dégivrage disponibles sur le marché qui n'excèdent pas 70%.

Suite à l'injection, après une circulation du flux d'air chaud FAC sur une longueur de l'ordre de 15 fois le diamètre global de l'embouchure 30 de l'injecteur 3 dans la cavité intérieure 20, l'ensemble du volume d'air dans la cavité intérieure 20 est déplacé pour chauffer par convection la lèvre d'entrée d'air. De manière avantageuse, du fait de la dissymétrie initiale, la température transversale du volume d'air est homogène, ce qui permet un échange thermique optimal.

## Revendications

1. Dispositif de dégivrage pour une entrée d'air (2) d'une nacelle de turboréacteur (1) d'aéronef s'étendant selon un axe X dans lequel circule un flux d'air (F) d'amont vers l'aval, l'entrée d'air (2) comportant une cavité intérieure (20), s'étendant de manière annulaire autour de l'axe X, qui comporte une paroi intérieure (21) tournée vers l'axe X et une paroi extérieure (22) qui est opposée à la paroi intérieure (21), les parois (21, 22) étant reliées par un bord d'attaque (23), le dispositif de dégivrage comportant au moins un injecteur (3) d'un flux d'air chaud (FAC) dans la cavité intérieure (20), l'injecteur (3) comportant une embouchure (30) s'étendant selon un axe d'embouchure (X2), **dispositif de dégivrage caractérisé par le fait que** l'embouchure (30) comporte un organe de séparation (4) afin de séparer l'embouchure (30) entre au moins un premier canal (31) configuré pour conduire un premier flux élémentaire (FE1) et au moins un deuxième canal (32) configuré pour conduire un deuxième flux élémentaire (FE2), l'embouchure (30) étant configurée pour éjecter le premier flux élémentaire (FE1) et le deuxième flux élémentaire (FE2) de manière superposée de manière à former le flux d'air chaud (FAC) ayant une dissymétrie selon l'axe d'embouchure (X2) de manière à générer des turbulences au voisinage de la paroi extérieure (22) tout en chauffant la paroi intérieure (21).

2. Dispositif de dégivrage selon la revendication 1, dans lequel le premier canal (31) comporte au moins un organe de déviation d'air (5).

3. Dispositif de dégivrage selon la revendication 2, dans lequel l'organe de déviation d'air (5) est configuré pour vriller le premier flux élémentaire (FE1).

4. Dispositif de dégivrage selon l'une des revendications 2 et 3, dans lequel l'organe de déviation d'air (5) possède une forme hélicoïdale.

5. Dispositif de dégivrage selon l'une des revendications 1 à 4, dans lequel le premier canal (31) est convergent de l'amont vers l'aval.

6. Entrée d'air (2) d'une nacelle de turboréacteur (1) d'aéronef s'étendant selon un axe X dans lequel circule un flux d'air (F) d'amont vers l'aval, l'entrée d'air (2) comportant une cavité intérieure (20), s'étendant de manière annulaire autour de l'axe X, qui comporte une paroi intérieure (21) tournée vers l'axe X et une paroi extérieure (22) qui est opposée à la paroi intérieure (21), les parois (21, 22) étant reliées par un bord d'attaque (23), l'entrée d'air (2) comportant un dispositif de dégivrage selon l'une des revendications 1 à 5, dans lequel le premier flux élémentaire (FE1) est configuré pour être injecté du côté de la paroi extérieure (22) de la cavité intérieure (20).

7. Entrée d'air (2) selon la revendication 6, dans lequel le deuxième flux élémentaire (FE2) est configuré pour être injecté du côté de la paroi intérieure (21) de la cavité intérieure (20).

8. Procédé d'utilisation d'un dispositif de dégivrage selon l'une des revendications 1 à 5 pour le dégivrage d'une entrée d'air (2) d'une nacelle de turboréacteur (1) d'aéronef s'étendant selon un axe X dans lequel circule un flux d'air (F) d'amont vers l'aval, l'entrée d'air (2) comportant une cavité intérieure (20), s'étendant de manière annulaire autour de l'axe X, qui comporte une paroi intérieure (21) tournée vers l'axe X et une paroi extérieure (22) qui est opposée à la paroi intérieure (21), les parois (21, 22) étant reliées par un bord d'attaque (23), le procédé comportant une étape d'injection d'un flux d'air chaud (FAC) ayant une dissymétrie selon l'axe d'embouchure (X2) de manière à générer des turbulences au voisinage de la paroi extérieure (22) tout en chauffant la paroi intérieure (21).

## Patentansprüche

1. Enteisungsvorrichtung für einen Lufteinlass (2) einer Turbinengondel (1) eines Flugzeugs, die sich gemäß einer Achse X erstreckt, in der ein Luftstrom (F) von stromaufwärts nach stromabwärts zirkuliert, wobei der Lufteinlass (2) einen inneren Hohlraum (20) aufweist, der sich ringförmig um die Achse X erstreckt, der eine zur Achse X gerichtete Innenwand (21) und eine der Innenwand (21) gegenüberliegende Außenwand (22) aufweist, wobei die Wände (21, 22) durch eine Vorderkante (23) verbunden sind, wobei die Enteisungsvorrichtung mindestens einen Injektor (3) für einen Warmluftstrom (FAC) in den inneren Hohlraum (20) umfasst, wobei der Injektor (3) eine sich gemäß einer Mündungsachse (X2) erstreckende Mündung (30) aufweist, wobei die Enteisungsvorrichtung **dadurch gekennzeichnet ist, dass** die Mündung (30) ein Trennelement (4) aufweist, um die Mündung (30) zwischen mindestens einem ersten Kanal (31), der ausgelegt ist, um einen ersten Elementarstrom (FE1) zu leiten, und mindestens einem zweiten Kanal (32), der ausgelegt ist, um einen zweiten Elementarstrom (FE2) zu leiten, zu trennen, wobei die Mündung (30) ausgelegt ist, um den ersten Elementarstrom (FE1) und den zweiten Elementarstrom (FE2) derart übereinanderliegend auszustoßen, dass der Warmluftstrom (FAC) mit einer Asymmetrie gemäß der Mündungsachse (X2) gebildet wird, so dass Turbulenzen in der Nähe der Außenwand (22) erzeugt werden und gleichzeitig die Innenwand (21) erwärmt wird.

2. Enteisungsvorrichtung nach Anspruch 1, wobei der erste Kanal (31) mindestens ein Luftablenkungselement (5) umfasst.

3. Enteisungsvorrichtung nach Anspruch 2, wobei das Luftablenkungselement (5) ausgelegt ist, um den ersten Elementarstrom (FE1) zu verdrehen.

4. Enteisungsvorrichtung nach einem der Ansprüche 2 und 3, wobei das Luftablenkungselement (5) eine spiralförmige Form aufweist.

5. Enteisungsvorrichtung nach einem der Ansprüche 1 bis 4, wobei der erste Kanal (31) von stromaufwärts nach stromabwärts konvergiert.

6. Lufteinlass (2) einer Turbinengondel (1) eines Flugzeugs, der sich gemäß einer Achse X erstreckt, in der ein Luftstrom (F) von stromaufwärts nach stromabwärts zirkuliert, wobei der Lufteinlass (2) einen inneren Hohlraum (20) aufweist, der sich ringförmig um die Achse X erstreckt, der eine zur Achse X gerichtete Innenwand (21) und eine der Innenwand (21) gegenüberliegende Außenwand (22) aufweist, wobei die Wände (21, 22) durch eine Vorderkante (23) verbunden sind, wobei der Lufteinlass (2) eine Enteisungsvorrichtung nach einem der Ansprüche 1 bis 5 umfasst, wobei der erste Elementarstrom (FE1) ausgelegt ist, um von der Seite der Außenwand (22) des inneren Hohlraums (20) aus eingeleitet zu werden.

7. Lufteinlass (2) nach Anspruch 6, wobei der zweite Elementarstrom (FE2) ausgelegt ist, um von der Seite der Innenwand (21) des inneren Hohlraums (20) aus eingeleitet zu werden.

8. Verfahren zur Verwendung einer Enteisungsvorrichtung nach einem der Ansprüche 1 bis 5 zum Enteisen eines Lufteinlasses (2) einer Turbinengondel (1) eines Flugzeugs, die sich gemäß einer Achse X erstreckt, in der ein Luftstrom (F) von stromaufwärts nach stromabwärts zirkuliert, wobei der Lufteinlass (2) einen inneren Hohlraum (20) aufweist, der sich ringförmig um die Achse X erstreckt, der eine zur Achse X gerichtete Innenwand (21) und eine der Innenwand (21) gegenüberliegende Außenwand (22) aufweist, wobei die Wände (21, 22) durch eine Vorderkante (23) verbunden sind, wobei das Verfahren einen Schritt des Einleitens eines Warmluftstroms (FAC) mit einer Asymmetrie gemäß der Mündungsachse (X2) umfasst, so dass Turbulenzen in der Nähe der Außenwand (22) erzeugt werden und gleichzeitig die Innenwand (21) erwärmt wird.

## Claims

1. A deicing device for an air intake (2) of a nacelle of an aircraft turbojet engine (1) extending along an axis X in which an air stream (F) circulates from upstream to downstream, the air intake (2) comprising an internal cavity (20) annularly extending about axis X, which comprises an internal wall (21) facing axis X and an external wall (22) which is opposite to the internal wall (21), the walls (21, 22) being connected by a leading edge (23), the deicing device comprising at least one injector (3) for a hot air stream (FAC) into the internal cavity (20), the injector (3) comprising a mouthpiece (30) extending along a mouthpiece axis (X2), which deicing device is **characterized in that** the mouthpiece (30) comprises a separating member (4) in order to separate the mouthpiece (30) between at least one first channel (31) configured to lead a first elementary stream (FE1) and at least one second channel (32) configured to lead a second elementary stream (FE2), the mouthpiece (30) being configured to eject the first elementary stream (FE1) and the second elementary stream (FE2) in a superposed manner so as to form a hot air stream (FAC) having an asymmetry along the mouthpiece axis (X2) so as to generate turbulence in the vicinity of the external wall (22) while heating the internal wall (21).

2. The deicing device according to claim 1, wherein the first channel (31) comprises at least one air deflection member (5).

3. The deicing device according to claim 2, wherein the air deflection member (5) is configured to twist the first elementary stream (FE1).

4. The deicing device according to any of claims 2 and 3, wherein the air deflection member (5) has a helical shape.

5. The deicing device according to any of claims 1 to 4, wherein the first channel (31) is convergent from upstream to downstream.

6. An air intake (2) of a nacelle of an aircraft turbojet engine (1) extending along an axis X in which an air stream (F) circulates from upstream to downstream, the air intake (2) comprising an internal cavity (20), annularly extending about axis X, which comprises an internal wall (21) facing axis X and an external wall (22) which is opposite to the internal wall (21), the walls (21, 22) being connected by a leading edge (23), the air intake (2) comprising a deicing device according to one of claims 1 to 5, wherein the first elementary stream (FE1) is configured to be injected on the side of the external wall (22) of the internal cavity (20).

7. The air intake (2) according to claim 6, wherein the second elementary stream (FE2) is configured to be injected on the side of the internal wall (21) of the internal cavity (20).

8. A method for using a deicing device according to one of claims 1 to 5 for deicing an air intake (2) of a nacelle of an aircraft turbojet engine (1) extending along an axis X in which an air stream (F) circulates from upstream to downstream, the air intake (2) comprising an internal cavity (20), annularly extending about axis X, which comprises an internal wall (21) facing axis X and an external wall (22) which is opposite to the internal wall (21), the walls (21, 22) being connected by a leading edge (23), the method comprising a step of injecting a hot air stream (FAC) having an asymmetry along the mouthpiece axis (X2) so as to generate turbulence in the vicinity of the external wall (22) while heating the internal wall (21).
